# EUROPEAN PATENT SPECIFICATION

(11) **EP 2 495 216 B1**
(45) Date of publication and mention of the grant of the patent: **28.02.2018**
(21) Application number: 10808333.8
(22) Date of filing: 10.08.2010
(51) Int. Cl.: C01B 32/05, C01B 32/20, B01J 19/00, B01J 6/00, B82Y 40/00, B82Y 30/00

(54) **METHOD AND APPARATUS FOR PRODUCING A NANOSCALE MATERIAL HAVING A GRAPHENE STRUCTURE**
VERFAHREN UND VORRICHTUNG ZUR HERSTELLUNG VON MATERIAL IM NANOMASSSTAB MIT GRAPHENSTRUKTUR
PROCÉDÉ ET APPAREIL PERMETTANT LA PRODUCTION D UN MATÉRIAU D ÉCHELLE NANOMÉTRIQUE PRÉSENTANT UNE STRUCTURE DE GRAPHÈNE

(30) Priority: 10.08.2009 KR 20090073152; 10.08.2010 KR 20100076871
(43) Date of publication of application: 05.09.2012
(73) Proprietor: STANDARDGRAPHENE CO., LTD., Ulsan 44412 (KR)
(72) Inventor: KWON, Young-Jin, Yongin-si Gyeonggi-do 448-130 (KR); PARK, Won-Hyung, Ulsan 681-819 (KR); SHIN, Cheol-Min, Ulsan 680-763 (KR); JI, Byoung-Kyu, Ulju-gun Ulsan 689-905 (KR); KWON, Doo-Hyo, Ulju-gun Ulsan 689-871 (KR); GU, Ja Woon, Ulsan 680-812 (KR)
(74) Representative: Manitz Finsterwald Patentanwälte PartmbB
(86) International application number: PCT/KR2010/005229
(87) International publication number: WO 2011/019184

(56) References cited:
- WO-A1-2007/071737
- WO-A1-2009/049375
- WO-A2-03/106386
- JP-A- 2007 009 205
- JP-A- 2007 505 975
- KR-A- 20090 062 067
- US-A1- 2006 293 443
- US-A1- 2007 092 432
- US-A1- 2008 206 124
- US-A1- 2009 028 777
- DATABASE WPI Week 200220 Thomson Scientific, London, GB; AN 2002-150836 XP002711514, & JP 2001 256976 A (NICHIRIN KK) 21 September 2001 (2001-09-21)

## Description

### [Technical Field]

The present disclosure relates to a method and apparatus for producing a nanoscale material including a graphene structure. In addition, the present disclosure relates to a method and apparatus for producing graphite oxide as an intermediate for the nanoscale material including a graphene structure.

### [Background Art]

Graphene has a two-dimensional carbon nano structure recently discovered and is formed in a single planar sheet of sp²-bonded carbon atoms in a honeycomb crystal lattice. A shape of the graphene is the same as that of fully delaminated graphite separated the graphite which has a laminated structure of honeycomb crystal lattices.

In 2004, Professor Andre Geim et al. from the University of Manchester first mechanically delaminated graphene from graphite by using "Scotch tape method" and found excellent electric conductivity of graphene through the study of a quantum hall effect by using the delaminated graphene. In 2008, James Hone et al., researchers from Colombia University, confirmed superior strength of graphene. In the same year, Alexander Balandin et al., researchers from University of California Riverside, measured thermal conductivity of graphene as 5300 pW/mpK, which is double that of carbon nanotubes.

Longitudinal scission of a carbon nanotube makes a graphene structure and infinite enlargement of a wall diameter makes a carbon nanotube similar to graphene. Therefore, electrical, thermal, and mechanical properties of graphene are expected to be comparable to those of carbon nanotubes.

For preparation of graphene, mechanical exfoliation of graphite crystals as carried out by Professor Andre Geim et al., epitaxial growth on substrates, hydrazine reduction on graphite oxide sheet, chemical vapor deposition, and cutting nanotubes in a solution of potassium permanganate and sulfuric acid have been known but none of them go beyond laboratory preparation levels.

On the other hand, a method of producing expanded graphite, in a shape of which is worm-like or accordion-like, by intercalating acid between graphite crystal layers by adding acids to the graphite flakes and adding thermal shock thereto has been known since long before. Such worm-like expanded graphite is used as s filler or compression-processed to be used as a sheet having anisotropic conductivity. Such expanded graphite resulting from loose bonding between layers of graphite is inferior to graphene in physical properties and its particulate size is much bigger than graphene.

JP 2001 256976 A discloses an intercalation compound in which a conductive polymer exists between layers of graphite oxide. US 2007/092432 A1 teaches a thermally exfoliated graphite oxide. US 2006/293443 A1 discloses a polyurethane-graphite oxide composite material and its manufacturing method. US 2008/206124 A1 provides a method of producing nano-scaled graphene and inorganic platelets and their nano composites. US 2009/049375 A1 discloses a process for producing nano-scaled graphene platelet nano-composite electrodes for super capacitors.

As a method for preparing graphite oxide, there has been known a Staudenmaier method in which graphite powder reacts with sulfuric acid, fuming nitric acid, and potassium perchlorinate for days to produce graphite oxide. Further, it is described in US patent No. 2798878 that Hummers shortened a reaction time by using sulfuric acid, sodium nitrate, and potassium permanganate.

A reaction of mixing sulfuric acid, sodium nitrate, and potassium permanganate together is an exothermic reaction and during the mixing reaction, Mn₂O₇ produced by a reaction between sulfuric acid and potassium permanganate may cause explosion at about 55°C or more. Thus, in this method, graphite oxide in a very small amount can be prepared only by a batch process and there is a limit on mass production of graphite oxide.

Therefore, it is an object of the invention to develop a process for solving the problems and allowing mass production of graphite oxide.

The object is satisfied by the subject matter of the independent claims.

### [Disclosure of the Invention]

An illustrative embodiment provides a method and apparatus for massively, safely and economically producing a nanoscale material having a structure and characteristics of graphene.

Further, an illustrative embodiment provides a method and apparatus for consecutively producing graphite oxide as an intermediate for a nanoscale material including a graphene structure.

### [Means for Solving the Problems]

In view of the foregoing, there is provided a method for producing graphite oxide. The method for producing graphite oxide comprises preparing a graphite slurry by mixing graphite with sulfuric acid (1^{st} step); introducing the graphite slurry to a micro-channel part having one or more micro-channels arranged in order (2^{nd} step); preparing permanganate sulfuric acid solution by adding permanganate supplied from a permanganate supply unit into a pre-mixer in which sulfuric acid is continuously injected, adding the prepared permanganate sulfuric acid solution into the micro-channel part and mixing them to obtain a reaction mixture (3^{rd} step); adding water to the reaction mixture of the 3^{rd} step and mixing them (4^{th} step); adding an aqueous hydrogen peroxide solution to the reaction mixture of the 4^{th} step and mixing them to terminate an oxidation reaction (5^{th} step); washing and separating the graphite oxide from the reaction mixture of the 5^{th} step (6^{th} step); and drying the graphite oxide obtained after the 6^{th} step (7^{th} step). The 1^{st} to 5^{th} steps are carried out continuously, the 3rd step is performed while a temperature ranging from about 0°C to about 54°C is maintained; and the aqueous hydrogen peroxide solution is in a range of from about 1% by weight to about 10% by weight.

### [Effect of the Invention]

According to the illustrative embodiments, a temperature is locally and precisely adjusted by using a micro-channel reactor equipped in a heat exchanger, graphite slurry and permanganate sulfuric acid solution are consecutively and respectively introduced into a micro-channel by force to cause an oxidation reaction at a graphite interlayer, and expansion efficiency and exfoliation efficiency of the graphite interlayer are enhanced through ultrasonication. Thus, a risk of explosion can be reduced during a graphite oxide preparing process and a large amount of graphite oxide can be produced economically.

Moreover, during the preparing process, a nanoscale material including a graphene structure produced by delaminating such graphite oxide easily obtains physical properties comparable to those of carbon nanotubes and also has superior dispersibility as compared with carbon nanotubes having low dispersibility due to a small amount of remaining functional groups such as a carboxyl group or a hydroxyl group. Therefore, the nanoscale material including a graphene structure can be applied to various fields such as a polymer composite material, a filler, a secondary battery, a transistor, a hydrogen gas reservoir, a super capacitor, a top gate, a biosensor, and the like based on the physical properties including high thermal conductivity, high electric conductivity, high strength, high specific surface area, high flexibility, and the like.

### [Brief Description of the Drawings]

Figs. 1 and 2 are schematic each showing an illustrative embodiment for producing graphite oxide.
Fig. 3 is a partial exploded enlarged perspective view showing a configuration of a micro-channel part shown in Fig. 1.
Figs. 4 and 5 are schematic each showing a process for producing a nanoscale material including a graphene structure by delaminating graphite oxide depicted in Fig. 3 with thermal shock in a vertical fluidized bed furnace.

### [Best Mode for Carrying out the Invention]

An illustrative embodiment provides a method for producing graphite oxide. The method for producing graphite oxide comprises preparing a graphite slurry by mixing graphite with sulfuric acid (1^{st} step); introducing the graphite slurry to a micro-channel part having one or more micro-channels arranged in order (2^{nd} step); adding one of permanganic acid, permanganate and permanganate sulfuric acid solution into the micro-channel part and mixing them to obtain a reaction mixture (3^{rd} step); adding water to the reaction mixture of the 3^{rd} step and mixing them (4^{th} step); adding an aqueous hydrogen peroxide solution to the reaction mixture of the 4^{th} step and mixing them to terminate an oxidation reaction (5^{th} step); washing and separating the graphite oxide from the reaction mixture of the 5^{th} step (6^{th} step); and drying the graphite oxide obtained after the 6^{th} step (7^{th} step). The 1^{st} to 5^{th} steps are carried out continuously.

In the graphite slurry, a weight ratio of graphite to sulfuric acid is about 1:10 to about 1:100, desirably about 1:30 to about 1:70. If the weight ratio of graphite to sulfuric acid is too high, a viscosity of the graphite slurry is increased, and, thus, it is difficult to transfer and mix a reactant within a micro-channel. If the weight ratio of graphite to sulfuric acid is too low, reaction efficiency is decreased and a large amount of waste sulfuric acid by-product can be generated.

Generally, desirably, the graphite has a bigger particle size and graphite of about 1 *µ*m or more can be used. By way of example, graphite powder of about 1 *µ*m to about 300 *µ*m may be used. If a particle size of the graphite is too small, an expansion effect affected by a weight density is low and thus graphene may not be formed well by exfoliation.

Moreover, sulfuric acid may have a concentration of about 80% or more, desirably about 80% to about 98%. The graphite slurry can be prepared by dispersing the graphite powder into the sulfuric acid.

The graphite slurry is supplied to the micro-channel part through a metering pump connected to the micro-channel part. The amount of the supplied graphite slurry can be strictly controlled by a metering method or the like.

The permanganic acid or the permanganate is introduced into the micro-channel part with a carrier gas such as nitrogen and mixed with the sulfuric acid introduced into the micro-channel part as being contained in the graphite slurry, so that the permanganate sulfuric acid solution can be prepared. Moreover, the permanganate sulfuric acid solution may be prepared by consecutively introducing the permanganate supplied from a permanganate supply unit into a pre-mixer to which the sulfuric acid is consecutively introduced and mixing them. The prepared permanganate sulfuric acid solution is introduced into the micro-channel part.

The reaction between the permanganate and the sulfuric acid is performed in the pre-mixer at a constant temperature of about 0°C to about 54°C. Particularly, since Mn₂O₇ produced by the reaction between the permanganate and the sulfuric acid has a risk of explosion at a temperature of about 55°C or more, it is necessary to consecutively introduce and mix the permanganate and the sulfuric acid little by little.

In the permanganate sulfuric acid solution, a weight ratio of permanganate to the sulfuric acid is about 1:2 to about 1:50, desirably about 1:5 to about 1:30. The permanganate includes potassium permanganate or sodium permanganate, permanganic acid ammonium, calcium permanganate, and the like. The sulfuric acid has a concentration of about 80% or more, desirably about 80% to about 98%. The permanganate sulfuric acid solution can be prepared by dissolving the permanganate in the sulfuric acid. If a weight ratio of the permanganate to the sulfuric acid is smaller than the above-described range, an oxidation reaction cannot proceed smoothly. If it is greater, a production cost may be increased due to an increase in a cost of raw materials.

The permanganate sulfuric acid solution is supplied into the micro-channel part through the metering pump connected to the micro-channel part. The amount of the supplied graphite slurry can be strictly controlled by the metering method or the like.

Further, the reaction of the 3^{rd} step is performed while keeping a reaction temperature ranging from about 0°C to about 54°C. Mn₂O₇ produced from the reaction between the permanganate and the sulfuric acid may cause explosion if the reaction temperature exceeds about 54°C.

Moreover, the 4^{th} step and the 5^{th} step can be performed while keeping a reaction temperature ranging from about 0°C to about 99°C. If the reaction temperature is lower than about 0°C, the reaction mixture may be frozen. If the reaction temperature is higher than about 99°C, the graphite oxide as a reaction product may be broken

Moreover, a step of filtering the reaction mixture of the 4^{th} step may be included between the 4^{th} step and the 5^{th} step. The reactions of the 4^{th} step and the 5^{th} step can be performed in any one of micro-channels or a blending tank.

Moreover, the reactions of the 3^{rd} step to the 5^{th} step can be performed under ultrasonication in order to increase expansion efficiency and exfoliation efficiency of a graphite interlayer. At this time, desirably, the ultrasonication is performed at from about 0.05 W/cm³ to about 5.0 W/cm³ for from about 0.2 hours to about 500 hours. If the ultrasonication is performed at lower than about 0.05 W/cm³, the exfoliation efficiency is insignificant. If the ultrasonication is performed at higher than about 5.0 W/cm³, particles may be broken due to ultrasound, so that a particle size becomes smaller. Moreover, if the ultrasonication is performed for shorter than about 0.2 hours, the exfoliation efficiency is insignificant. If the ultrasonication is performed for longer than about 500 hours, the particles may be broken due to ultrasound, so that the particle size becomes smaller.

Desirably, a weight ratio of the graphite to the water is about 1:1 to about 1:100. If a weight ratio of the graphite to the water is smaller than the above-described range, the oxidation reaction cannot proceed smoothly. If it is greater, a large amount of waste water can be generated, resulting in an increase in a production cost. At this time, the water is supplied to the micro-channel part through the metering pump and the amount of the supplied water can be strictly controlled by the metering method or the like.

A concentration of the hydrogen peroxide is about 1% by weight to about 10% by weight, preferably about 2% by weight to about 7% by weight. Regarding a weight ratio of the graphite to the aqueous hydrogen peroxide solution, the aqueous hydrogen peroxide solution may be added not quantitatively but heuristically based on the concentration of the hydrogen peroxide of about 3% by weight such that the weight ratio of the graphite to the aqueous hydrogen peroxide solution is similar to the weight ratio of the graphite to the sulfuric acid as about 1:10 to about 1:100, desirably about 1:30 to about 1:70. The aqueous hydrogen peroxide solution reduces extra permanganate to terminate the graphite oxidation. If the added amount is excessive, it costs much to wash and dry. If the added amount is insufficient, the reaction cannot be terminated. A holding time after adding the aqueous hydrogen peroxide solution may be about several ten minutes or less.

The micro-channel part includes one or more micro-channels connected to each other. The number of the micro-channels may vary depending on a reaction time. It takes a residence time of several minutes to several days, desirably, about 0.2 hours to about 24 hours to perform the oxidation reaction between the graphite slurry and the permanganate sulfuric acid solution.

Within the micro-channel part, the oxidation reaction between the graphite slurry and the permanganate sulfuric acid solution needs to be maintained at about 0°C to about 54°C, desirably at about 10°C to about 54°C. If the reaction temperature is lower than the above-described range, the reaction efficiency is low. If it is higher, a risk of explosion is high. Thus, in order to prevent the micro-channel part from explosion caused by local overheating, the reaction temperature needs to be strictly controlled in the above-described temperature range. At this time, desirably, the micro-channel part may be loaded in the heat exchanger including a cooling system so as to be controlled in a certain temperature range.

Each micro-channel of the micro-channel part may be a tube-type reactor. The tube-type reactor has an inner diameter of about 1µm to about 1 mm so as to mix the reaction mixture well in the micro-channel for high reaction efficiency and has high thermal conductivity, high corrosion resistance, and high acid resistance. The reactor has an inner diameter of about 1µm to about 1 mm for, particularly, high reaction efficiency and safe operation. The reaction mixture can move in the micro-channel with a flow rate of, typically about 0.1 ℓ/hr to about 100 ℓ/hr, desirably about 1 ℓ/hr to about 50 ℓ/hr.

After the permanganate sulfuric acid solution is added to the graphite slurry, the mixture may be maintained for, desirably several minutes to several days, more desirably about 0.2 hours to about 24 hours.

The graphite slurry, the permanganate sulfuric acid solution, the water, and the peroxide aqueous solution are supplied to each micro-channel through each metering pump. Desirably, the graphite slurry and permanganate sulfuric acid solution are supplied into the micro-channel by the metering pump at a sufficient pressure and a sufficient rate such that the reaction mixture can form a vortex in the micro-channel.

By supplying the peroxide aqueous solution, extra permanganic acid is reduced to terminate the reaction and the terminated reaction mixture is discharged through an outlet of the micro-channel. Before being dried, the terminated reaction mixture discharged through the outlet of the micro-channel may be washed with washing water such as pure water or water having a proper pH in a range of, for example, from about 5 to about 6 one or more times and may be dried at about 200°C or less, desirably about 80°C or less within about 96 hours under a depressurized atmosphere. These washing and drying processes may be performed independently of the previous steps or may be performed consecutively.

Moreover, an illustrative embodiment provides a graphite oxide producing apparatus. The graphite oxide producing apparatus includes a graphite slurry supplying unit for continuously supplying a graphite slurry by mixing graphite and sulfuric acid; a permanganate supplying unit for continuously supplying one of permanganic acid, permanganate, and a permanganate sulfuric acid solution; a micro-channel part including one or more micro-channels arranged in order and each having an inlet connected to the graphite slurry supplying unit and the permanganate supplying unit in which a reaction mixture is maintained in a predetermined temperature range; a water supplying unit configured to continuously supply water and having an inlet connected to the micro-channel part; a hydrogen peroxide supplying unit configured to continuously supply an aqueous hydrogen peroxide solution having an inlet connected to the micro-channel part; a washer connected to the micro-channel part for washing graphite oxide discharged from the micro-channel part after an oxidation reaction is terminated; and a drier connected to the washer for drying the graphite oxide washed in the washer under a depressurized atmosphere.

The graphite oxide producing apparatus may further include a pre-mixer positioned between the permanganate supplying unit and the micro-channel part and configured to continuously supply and mix the sulfuric acid and permanganate supplied from the permanganate supplying unit.

The micro-channel part includes multiple micro-channels connected to each other. The micro-channel part has a residence time of several minutes to several days, desirably about 0.2 hours to about 24 hours.

Moreover, an illustrative embodiment provides a method for producing a nanoscale material including a graphene structure. The method comprises preparing a graphite slurry by mixing graphite with sulfuric acid (1^{st} step); introducing the graphite slurry to a micro-channel part having one or more micro-channels arranged in order (2^{nd} step); adding one of permanganic acid, permanganate, and permanganate sulfuric acid solution into the micro-channel part and mixing them to obtain reaction mixture (3^{rd} step); adding water to the reaction mixture of the 3^{rd} step and mixing them (4^{th} step); adding an aqueous hydrogen peroxide solution to the reaction mixture of the 4^{th} step and mixing them to terminate an oxidation reaction (5^{th} step); washing and separating the graphite oxide from the reaction mixture of the 5^{th} step (6^{th} step); drying the graphite oxide obtained after the 6^{th} step (7^{th} step); supplying the graphite oxide of the 7^{th} step into a fluidized bed furnace in a reducing atmosphere to reduce and delaminate the graphite oxide by thermal shock (8^{th} step); collecting a nanoscale material including a graphene structure produced in the 8^{th} step (9^{th} step); and separating the nanoscale material including a graphene structure (10^{th} step). The 1^{st} to 5^{th} steps and the 8^{th} to 10^{th} steps are carried out continuously.

The nanoscale material including a graphene structure is a material having a graphene structure formed of single or multi layers having a thickness of about 100 nm or less based on a single-layered graphene basic material having a two-dimensional carbon nano structure and formed in a honeycomb crystal lattice of a single planar sheet. According to an XRD analysis, the nanoscale material including a graphene structure is defined as material that does not have a significant peak except traces or the like in the range that 2θ is about 2° or more. The nanoscale material including a graphene structure has a thickness of about 100 nm or less, a surface area ranging from about 300 m²/g to about 3000 m²/g, and residual oxygen of about 1.0 % by weight or less with respect to graphite.

Graphite has laminated layers of graphene and a constant gap of about 3.35 Å between the layers and also has a peak when 2θ is about 26.5° according to an XRD analysis. Graphite oxide in accordance with an illustrative embodiment is obtained by oxidizing graphite. A functional group containing oxygen, such as carboxylic acid, a hydroxyl group, and an epoxy group, is bonded to each graphene layer of the graphite oxide through an oxidation reaction. The graphite oxide also has laminated layers, but a gap between the layers is greater than the gap of the graphite and typically has an XRD peak when 2θ is about 6° to about 15°. Such graphite oxide is delaminated by thermal shock to be a nanoscale material including a graphene structure..

In accordance with an illustrative embodiment, graphite oxide can be transformed into a nanoscale material including a graphene structure in a fluidized bed furnace, particularly a vertical fluidized bed furnace, by thermal shock. More specifically, the nanoscale material including a graphene structure can be produced continuously, and washed and dried graphite oxide is supplied into the fluidized bed furnace in which an atmospheric gas forms an air current. The fluidized bed furnace can be heated by a conventional method using a heater or by a method using microwaves.

The air current may be formed by a wind pressure of a reducing atmospheric gas supplied to the fluidized bed furnace or may be formed by convection of the atmospheric gas caused by the heating. Typically, the atmospheric gas includes an inert carrier gas such as nitrogen and argon. The atmospheric gas may be formed by adding a hydrogen gas to the inert carrier gas such as nitrogen and argon in order to increase reduction efficiency of the graphite oxide. The temperature of inside of the fluidized bed furnace may be maintained at about 300°C to about 1200°C, desirably about 500°C to about 1000°C .

Graphite oxide flakes are delaminated by thermal shock, and only the nanoscale material including a graphene structure sufficiently separated by an adjusted air current rides the air current to an inlet of a collection unit provided at a ceiling of the fluidized bed furnace to be collected and separated. The nanoscale material including a graphene structure is separated by a cyclone collector if necessary and the separated atmospheric gas is resupplied into the fluidized bed furnace.

The 1^{st} to 7^{th} steps are performed in the same manner as described above. Therefore, a detailed explanation thereof will be omitted.

Moreover, in accordance with an illustrative embodiment, there is provided an apparatus for producing a nanoscale material including a graphene structure. The apparatus comprises a graphite oxide powder supplying unit; a fluidized bed furnace that includes a 1st inlet connected to the graphite oxide powder supplying unit and a 2nd inlet for introducing a reducing atmospheric gas and maintains the reducing atmosphere and high temperature; and a collector including an inlet mounted at a ceiling of the fluidized bed furnace.

The graphite oxide powder supplying unit may be connected to an upper end of the fluidized bed furnace so as to drop the graphite oxide powder. Otherwise, the graphite oxide powder supplying unit may be connected to a lower end of the fluidized bed furnace so as to supply and move the graphite oxide powder upwards.

The apparatus may further comprise a cyclone connected to the collector and configured to separate the nanoscale material including a graphene structure from a gas of the fluidized bed furnace and resupply the separated gas of the fluidized bed furnace into the fluidized bed furnace.

### [Description of Embodiments]

Hereinafter, illustrative embodiments will be described in detail with reference to the accompanying drawings.

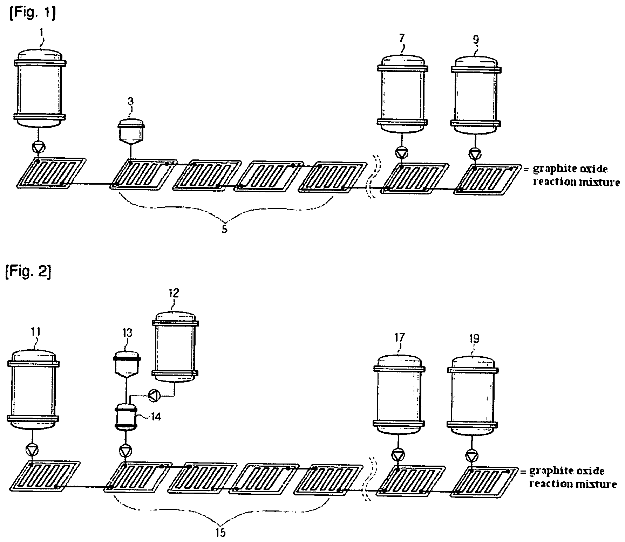

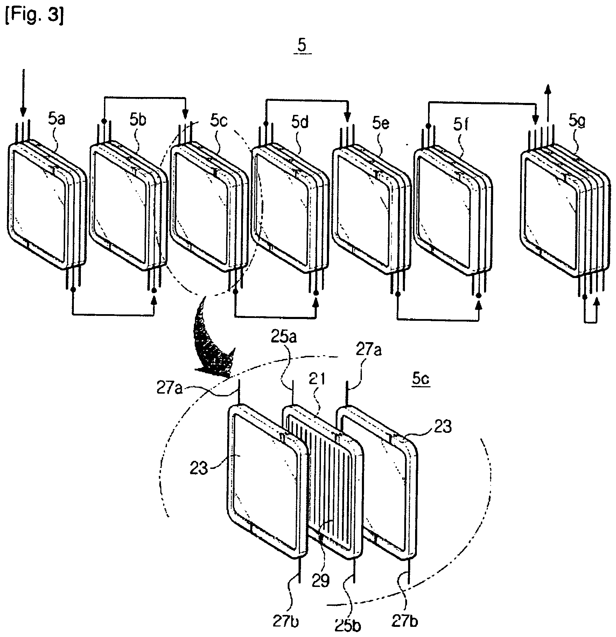

Referring to Figs. 1 to 3, a method and apparatus for producing graphite oxide in accordance with an illustrative embodiment will be explained.

Micro-channel parts 5 and 15 include one or more micro-channels connected to each other and include multiple micro-channel modules 5a, 5b, 5c, 5d, 5e, 5f, and 5g loaded within a heat exchanger 23. Each micro-channel includes an inlet, a reaction part, and an outlet.

Graphite slurry is produced in graphite slurry supply units 1 and 11 for producing graphite slurry by consecutively mixing sulfuric acid supplied from a sulfuric acid supply unit through a liquid metering pump with graphite supplied from a graphite supply unit through a powder metering pump. The graphite slurry is injected compulsorily from the graphite slurry supply units 1 and 11 into the micro-channels or a mixing reactor.

Permanganic acid or permanganate is injected compulsorily from a permanganate supply unit 3 into the micro-channel part 5 by using a carrier gas or the like. A permanganate sulfuric acid solution containing sulfuric acid and permanganate mixed together is injected compulsorily into the micro-channel part 15 from a pre-mixer 14 that mixes sulfuric acid continuously supplied from a sulfuric acid supply unit 12 with permanganate continuously supplied from a permanganate supply unit 13 to produce the permanganate sulfuric acid solution.

The micro-channel parts 5 and 15 include the multiple micro-channel modules 5a, 5b, 5c, 5d, 5e, 5f, and 5g each surrounded by heat exchangers 23 to precisely adjust a temperature. Each of the micro-channel modules 5a, 5b, 5c, 5d, 5e, 5f, and 5g includes a channel 29, an inlet 25a, and an outlet 25b connected to each other to form a single channel 29.

Each micro-channel plate 25 is inserted into the two flat plate-shaped heat exchangers 23 each including a thermal medium inlet 27a and an outlet 27b to form a single micro-channel module (for example, 5c). Desirably, the micro-channel modules 5a, 5b, 5c, 5d, 5e, 5f, and 5g are relaminated to take up smaller space. If necessary, an insulating plate may be provided between the modules. In the vicinity of a starting portion (for example, 5a) of the micro-channels, mixing is more important than a reaction rate. Therefore, desirably, it is operated at a relatively low temperature ranging from about 0°C to about 54°C considering a variable depending on a change in inflow. At a last portion (for example, 5g) of the reactor, desirably, it is operated at a constant temperature of about 54°C to stably maintain a high reaction rate.

The graphite slurry and the permanganate sulfuric acid solution are mixed within the channels 29 of the micro-channel parts 5 and 15 and held for about 20 minutes until the reaction mixture reaches the outlets. The outlets of the micro-channel parts 5 and 15 are first connected to pure water supply units 7 and 17 to add water to the reaction mixture and then connected to hydrogen peroxide supply units 9 and 19 to add a 3% aqueous hydrogen peroxide solution from the hydrogen peroxide supply units 9 and 19 to the reaction mixture through a metering pump, and this oxidation reaction is terminated. Then, the reaction mixture discharged after the termination of the oxidation reaction is washed and dried to produce graphite oxide.

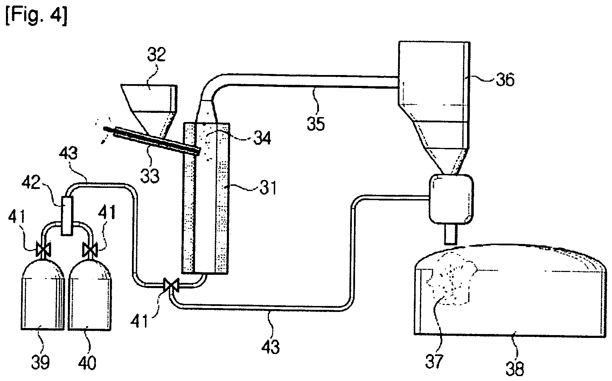

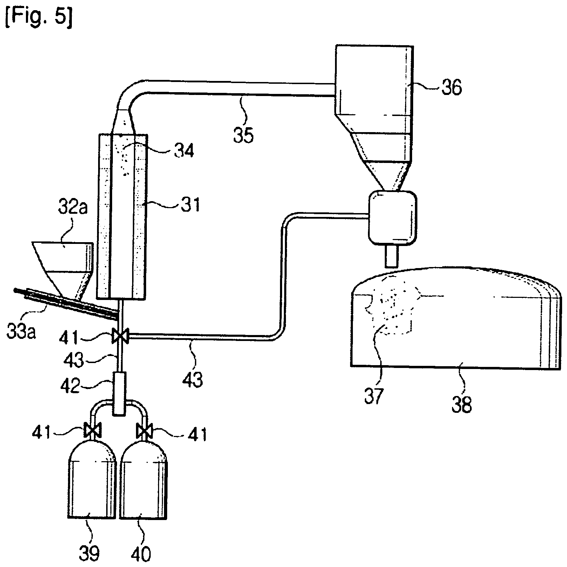

Figs. 4 and 5 illustrate a process for producing a nanoscale material including a graphene structure in accordance with an illustrative embodiment.

If graphite oxide powder is supplied from graphite oxide powder supply units 32 and 32a through input units 33 and 33a positioned at an upper end or a lower end of a vertical fluidized bed furnace 31, in which a high temperature of about 800°C is maintained, and the graphite oxide powder is dropped or moved upwards, graphite oxide 34 dropped or moved upwards is delaminated and peeled off by thermal shock and moved upwards along an upward air current formed within the vertical fluidized bed furnace 31 to be sucked into a collection pipe 35.

Graphene particles are separated by using a cyclone 36 and a separated gas is resupplied into the fluidized bed furnace 31 through a pipe 43 and the separated gas is resupplied to a bottom area of the fluidized bed furnace 31 together with a hydrogen atmospheric gas supplied from a nitrogen tank 39 and a hydrogen tank 40 through a mixer 42 and a line 43. A separated nanosacle material having a graphene structure 37 is collected at a reservoir 38 under the cyclone 36.

The same reference numerals of Figs. 4 and 5 denote the same elements each having the same configuration operated in the same manner.

## Claims

1. A method for producing graphite oxide, the method comprising:
preparing a graphite slurry by mixing graphite with sulfuric acid (1^{st} step);
introducing the graphite slurry to a micro-channel part having one or more micro-channel arranged in order (2^{nd} step); preparing a permanganate sulfuric acid solution by adding permanganate supplied from a permanganate supply unit into a pre-mixer in which sulfuric acid is continuously injected, adding the prepared permanganate sulfuric acid solution into the micro-channel and mixing them to obtain a reaction mixture (3rd step);
adding water to the reaction mixture of the 3^{rd} step and mixing them (4^{th} step) ;
adding an aqueous hydrogen peroxide solution to the reaction mixture of the 4^{th} step and mixing them to terminate an oxidation reaction (5^{th} step);
washing and separating the graphite oxide from the reaction mixture of the 5^{th} step (6^{th} step); and
drying the graphite oxide obtained after 6^{th} step (7^{th} step),
wherein the 1^{st} to 5^{th} steps are carried out continuously,
wherein the 3rd step is performed while a temperature ranging from about 0°C to about 54°C is maintained; and
wherein the aqueous hydrogen peroxide solution is in a range of from about 1% by weight to about 10% by weight.

2. The method of claim 1, wherein the pre-mixer performs a reaction while a temperature ranging from about 0°C to about 54°C is maintained.

3. The method of claim 2, wherein a weight ratio of permanganate to sulfuric acid in the permanganate sulfuric acid solution is about 1:2 to about 1:50.

4. The method of claim 1, wherein reactions of the 3^{rd} to 5^{th} steps are performed under an ultrasonication treatment.

5. The method of claim 1, wherein the micro-channel part includes one or more micro-channels connected to each other, each having an internal diameter of about 1 µm to 1 mm.

6. The method of claim 1, wherein the micro-channel part is surrounded by a heat exchanger.

7. A method of producing a nanoscale material including a graphene structure, the method comprising:
preparing a graphite slurry by mixing graphite with sulfuric acid (1^{st} step);
introducing the graphite slurry to a micro-channel part having one or more micro-channels arranged in order (2^{nd} step);
preparing permanganate sulfuric acid solution by adding permanganate supplied from a permanganate supply unit into a pre-mixer in which sulfuric acid is continuously injected, and mixing them to obtain reaction mixture (3^{rd} step);
adding water to the reaction mixture of the 3^{rd} step and mixing them (4^{th} step);
adding an aqueous hydrogen peroxide solution to the reaction mixture of the 4^{th} step and mixing them to terminate an oxidation reaction (5^{th} step);
washing and separating the graphite oxide from the reaction mixture of the 5^{th} step (6^{th} step);
drying the graphite oxide obtained after the 6^{th} step (7^{th} step);
supplying the graphite oxide of the 7^{th} step into a fluidized bed furnace in a reducing atmosphere to reduce and delaminate the graphite oxide by thermal shock (8^{th} step);
collecting a nanoscale material including a graphene structure produced in the 8^{th} step (9^{th} step); and
separating the nanoscale material including a graphene structure (10^{th} step),
wherein the 1^{st} to 5^{th} steps and the 8^{th} to 10^{th} steps are carried out continuously,
wherein the 3rd step is performed while a temperature ranging from about 0°C to about 54°C is maintained; and
wherein the aqueous hydrogen peroxide solution is in a range of from about 1% by weight to about 10% by weight.

8. The method of claim 7, wherein the nanoscale material including a graphene structure has a thickness of about 100 nm or less, a surface area ranging from about 300 m²/g to about 3000 m²/g and residual oxygen of about 1.0% by weight or less.

9. A graphite oxide producing apparatus comprising:
a graphite slurry supplying unit for continuously supplying graphite slurry by mixing graphite with sulfuric acid;
a permanganate supplying unit for continuously supplying a permanganate sulfuric acid solution;
a micro-channel part comprising one or more micro-channels arranged in order and each having an inlet connected to the graphite slurry supplying unit and the permanganate supplying unit in which a reaction mixture is maintained in a predetermined temperature range;
a water supplying unit configured to continuously supply water and having an inlet connected to the micro-channel part;
a hydrogen peroxide supplying unit configured to continuously supply a hydrogen peroxide solution and having an inlet connected to the micro-channel part;
a washer connected to the micro-channel part for washing graphite oxide discharged from the micro-channel part after an oxidation reaction is terminated; and
a drier connected to the washer for drying the graphite oxide washed in the washer under a depressurized atmosphere.

10. The graphite oxide producing apparatus of claim 9, further comprising:
a pre-mixer positioned between the permanganate supplying unit and the micro-channel part and configured to continuously supply and mix the sulfuric acid and permanganate supplied from the permanganate supplying unit, respectively.

11. The graphite oxide producing apparatus of claim 9, wherein the micro-channel part includes multiple micro-channels connected to each other.

12. An apparatus for producing a nanoscale material including a graphene structure, the apparatus comprising:
a graphite oxide producing apparatus according to any of claims 9 to 11 as a graphite oxide powder supplying unit;
a fluidized bed furnace that includes a 1st inlet connected to the graphite oxide powder supplying unit and a 2nd inlet for introducing a reducing atmospheric gas and maintains the reducing atmosphere and high temperature; and
a collector including an inlet mounted at a ceiling of the fluidized bed furnace.

13. The apparatus of claim 12, further comprising:
a cyclone connected to the collector for separating the nanoscale material including a graphene structure from a gas of the fluidized bed furnace and resupplying the separated gas into the fluidized bed furnace.

## Patentansprüche

1. Verfahren zum Herstellen von Graphitoxid, wobei das Verfahren umfasst:
Vorbereiten einer Graphitaufschlämmung durch Mischen von Graphit mit Schwefelsäure (1. Schritt);
Einleiten der Graphitaufschlämmung in einen Mikrokanalteil, der einen oder mehrere der Reihe nach angeordnete Mikrokanäle aufweist (2. Schritt);
Vorbereiten einer Permanganatschwefelsäurelösung durch Zugeben von Permanganat, das von einer Permanganat-Versorgungseinheit zugeführt wird, in einen Vormischer, in welchem Schwefelsäure kontinuierlich injiziert wird, Zugeben der vorbereiteten Permanganatschwefelsäurelösung in den Mikrokanal und Mischen derselben, um ein Reaktionsgemisch zu erhalten (3. Schritt);
Zugeben von Wasser zu dem Reaktionsgemisch des 3. Schrittes und Mischen derselben (4. Schritt);
Zugeben einer wässrigen Wasserstoffperoxidlösung zu dem Reaktionsgemisch des 4. Schrittes und Mischen derselben, um eine Oxidationsreaktion zu beenden (5. Schritt);
Waschen und Abscheiden des Graphitoxids aus dem Reaktionsgemisch des 5. Schrittes (6. Schritt); und
Trocknen des nach dem 6. Schritt erhaltenen Graphitoxids (7. Schritt);
wobei der 1. bis 5. Schritt kontinuierlich ausgeführt werden,
wobei der 3. Schritt durchgeführt wird, während eine Temperatur in einem Bereich von etwa 0°C bis etwa 54°C aufrechterhalten wird; und
wobei die wässrige Wasserstoffperoxidlösung in einem Bereich von etwa 1 Gewichts-% bis etwa 10 Gewichts-% liegt.

2. Verfahren nach Anspruch 1, wobei der Vormischer eine Reaktion durchführt, während eine Temperatur, die in einem Bereich von 0°C bis etwa 54°C liegt, aufrechterhalten wird.

3. Verfahren nach Anspruch 2, wobei ein Gewichtsverhältnis von Permanganat zu Schwefelsäure in der Permanganatschwefelsäurelösung etwa 1:2 bis 1:50 beträgt.

4. Verfahren nach Anspruch 1, wobei die Reaktionen des 3. bis 5. Schrittes unter einer Ultraschallbehandlung durchgeführt werden.

5. Verfahren nach Anspruch 1, wobei der Mikrokanalteil einen oder mehrere miteinander verbundene Mikrokanäle umfasst, die jeweils einen Innendurchmesser von etwa 1 µm bis 1 mm aufweisen.

6. Verfahren nach Anspruch 1, wobei der Mikrokanalteil von einem Wärmetauscher umgeben ist.

7. Verfahren zum Herstellen eines Materials im Nanomaßstab, das eine Graphenstruktur aufweist, wobei das Verfahren umfasst:
Vorbereiten einer Graphitaufschlämmung durch Mischen von Graphit mit Schwefelsäure (1. Schritt);
Einleiten der Graphitaufschlämmung in einen Mikrokanalteil, der einen oder mehrere der Reihe nach angeordnete Mikrokanäle aufweist (2. Schritt);
Vorbereiten einer Permanganatschwefelsäurelösung durch Zugeben von Permanganat, das von einer Permanganat-Versorgungseinheit zugeführt wird, in einen Vormischer, in welchem Schwefelsäure kontinuierlich injiziert wird, und Mischen derselben, um ein Reaktionsgemisch zu erhalten (3. Schritt);
Zugeben von Wasser zu dem Reaktionsgemisch des 3. Schrittes und Mischen derselben (4. Schritt);
Zugeben einer wässrigen Wasserstoffperoxidlösung zu dem Reaktionsgemisch des 4. Schrittes und Mischen derselben, um eine Oxidationsreaktion zu beenden (5. Schritt);
Waschen und Abscheiden des Graphitoxids aus dem Reaktionsgemisch des 5. Schrittes (6. Schritt); und
Trocknen des nach dem 6. Schritt erhaltenen Graphitoxids (7. Schritt);
Zuführen des Graphitoxids des 7. Schrittes in einen Wirbelschichtofen in einer reduzierenden Atmosphäre, um das Graphitoxid durch Temperaturstoß zu reduzieren und aufzublättern (8. Schritt);
Sammeln des im 8. Schritt hergestellten Materials im Nanomaßstab, das eine Graphenstruktur aufweist (9. Schritt);
Abscheiden des Materials im Nanomaßstab, das eine Graphenstruktur aufweist (10. Schritt),
wobei der 1. bis 5. Schritt und der 8. bis 10. Schritt kontinuierlich ausgeführt werden,
wobei der 3. Schritt durchgeführt wird, während eine Temperatur in einem Bereich von etwa 0°C bis etwa 54°C aufrechterhalten wird; und
wobei die wässrige Wasserstoffperoxidlösung in einem Bereich von etwa 1 Gewichts-% bis etwa 10 Gewichts-% liegt.

8. Verfahren nach Anspruch 7, wobei das Material im Nanomaßstab, das eine Graphenstruktur aufweist, eine Dicke von etwa 100 nm oder weniger, ein Oberfläche in einem Bereich von 300 m²/g bis etwa 3000 m²/g und einen Restsauerstoff von etwa 1,0 Gewichts-% oder weniger aufweist.

9. Graphitoxid-Herstellungsvorrichtung, umfassend:
eine Graphitaufschlämmung-Versorgungseinheit zum kontinuierlichen Zuführen einer Graphitaufschlämmung durch Mischen von Graphit mit Schwefelsäure;
eine Permanganat-Versorgungseinheit zum kontinuierlichen Zuführen einer Permanganatschwefelsäurelösung;
einen Mikrokanalteil, der einen oder mehrere der Reihe nach angeordneten Mikrokanäle umfasst, die jeweils einen Einlass aufweisen, der mit der Graphitaufschlämmung-Versorgungseinheit und der Permanganat-Versorgungseinheit verbunden ist, in welchem ein Reaktionsgemisch in einem vorbestimmten Temperaturbereich gehalten wird;
eine Wasser-Versorgungseinheit, die ausgestaltet ist, um kontinuierlich Wasser zuzuführen, und einen Einlass aufweist, der mit dem Mikrokanalteil verbunden ist;
eine Wasserstoffperoxid-Versorgungseinheit, die ausgestaltet ist, um kontinuierlich eine Wasserstoffperoxidlösung zuzuführen, und einen Einlass aufweist, der mit dem Mikrokanalteil verbunden ist;
einen Wäscher, der zum Waschen von nach Beendigung einer Oxidationsreaktion von dem Mikrokanalteil ausgetragenem Graphitoxid mit dem Mikrokanalteil verbunden ist; und
einen Trockner, der zum Trocknen des in dem Wäscher gewaschenen Graphitoxids unter druckloser Atmosphäre mit dem Wäscher verbunden ist.

10. Graphitoxid-Herstellungsvorrichtung nach Anspruch 9, ferner umfassend:
einen Vormischer, der zwischen der Permanganat-Versorgungseinheit und dem Mikrokanalteil angeordnet und ausgestaltet ist, um die Schwefelsäure und das Permanganat, das von der Permanganat-Versorgungseinheit zugeführt wird, jeweils kontinuierlich zuzuführen und zu mischen.

11. Graphitoxid-Herstellungsvorrichtung nach Anspruch 9, wobei der Mikrokanalteil mehrere miteinander verbundene Mikrokanäle umfasst.

12. Vorrichtung zum Herstellen eines Materials im Nanomaßstab, das eine Graphenstruktur aufweist, wobei die Vorrichtung umfasst:
eine Graphitoxid-Herstellungsvorrichtung nach einem der Ansprüche 9 bis 11 als eine Graphitoxidpulver-Versorgungseinheit;
einen Wirbelschichtofen, der einen ersten Einlass umfasst, der mit der Graphitoxidpulver-Versorgungseinheit verbunden ist, und einen zweiten Einlass zum Einleiten eines Gases für eine reduzierende Atmosphäre, und der die reduzierende Atmosphäre und eine hohe Temperatur aufrechterhält; und
einen Sammler, der einen Einlass umfasst, der an der Decke des Wirbelschichtofens montiert ist.

13. Vorrichtung nach Anspruch 12, ferner umfassend:
einen Zyklon, der mit dem Sammler zum Abscheiden des Materials im Nanomaßstab, das eine Graphenstruktur aufweist, aus einem Gas des Wirbelschichtofens, und zum erneuten Zuführen des abgeschiedenen Gases in den Wirbelschichtofen verbunden ist.

## Revendications

1. Procédé permettant la production d'oxyde de graphite, le procédé comprenant les étapes consistant à :
préparer un coulis de graphite en mélangeant du graphite et de l'acide sulfurique (1^{re} étape) ;
introduire le coulis de graphite jusque dans une partie à micro-canaux, ayant un micro-canal ou plusieurs micro-canaux agencés dans un ordre (2^{e} étape) ;
préparer une solution d'acide sulfurique au permanganate en ajoutant du permanganate, approvisionné depuis une unité d'approvisionnement en permanganate, jusque dans un pré-mélangeur dans lequel de l'acide sulfurique est injecté en continu, en ajoutant la solution d'acide sulfurique au permanganate préparée jusque dans le micro-canal, et en les mélangeant jusqu'à obtenir un mélange réactionnel (3^{e} étape) ;
ajouter de l'eau au mélange réactionnel de la 3^{e} étape et les mélanger (4^{e} étape) ;
ajouter une solution aqueuse de peroxyde d'hydrogène au mélange réactionnel de la 4^{e} étape et les mélanger afin de terminer une réaction d'oxydation (5^{e} étape) ;
laver et séparer l'oxyde de graphite hors du mélange réactionnel de la 5^{e} étape (6^{e} étape) ; et
sécher l'oxyde de graphite obtenu après la 6^{e} étape (7^{e} étape),
dans lequel les étapes 1 à 5 sont effectuées en continu,
dans lequel la 3^{e} étape est exécutée alors qu'on maintient une température dans une plage allant d'environ 0 °C à environ 54 °C ; et
dans laquelle la solution aqueuse de peroxyde d'hydrogène est dans une plage allant d'environ 1 % en poids à environ 10 % en poids.

2. Procédé selon la revendication 1, dans lequel le pré-mélangeur procède à une réaction alors qu'on maintient une température dans une plage allant d'environ 0 °C à environ 54 °C.

3. Procédé selon la revendication 2, dans lequel un rapport de poids du permanganate sur l'acide sulfurique, dans la solution d'acide sulfurique au permanganate, est d'environ 1 sur 2 à environ 1 sur 50.

4. Procédé selon la revendication 1, dans lequel les réactions des étapes 3 à 5 sont exécutées en utilisant un traitement à ultrasons.

5. Procédé selon la revendication 1, dans lequel la partie à micro-canaux présente un micro-canal ou plusieurs micro-canaux interconnectés, chacun ayant un diamètre interne d'environ 1µm à 1 mm.

6. Procédé selon la revendication 1, dans lequel la partie à micro-canaux est entourée par un échangeur de chaleur.

7. Procédé permettant la production d'un matériau d'échelle nanométrique présentant une structure de graphène, le procédé comprenant les étapes consistant à :
préparer un coulis de graphite en mélangeant du graphite et de l'acide sulfurique (1^{re} étape) ;
introduire le coulis de graphite jusque dans une partie à micro-canaux, ayant un micro-canal ou plusieurs micro-canaux agencés dans un ordre (2^{e} étape) ;
préparer une solution d'acide sulfurique au permanganate en ajoutant du permanganate, approvisionné depuis une unité d'approvisionnement en permanganate, jusque dans un pré-mélangeur dans lequel de l'acide sulfurique est injecté en continu, et en les mélangeant jusqu'à obtenir un mélange réactionnel (3^{e} étape) ;
ajouter de l'eau au mélange réactionnel de la 3^{e} étape et les mélanger (4^{e} étape) ;
ajouter une solution aqueuse de peroxyde d'hydrogène au mélange réactionnel de la 4^{e} étape et les mélanger afin de terminer une réaction d'oxydation (5^{e} étape) ;
laver et séparer l'oxyde de graphite hors du mélange réactionnel de la 5^{e} étape (6^{e} étape) ;
sécher l'oxyde de graphite obtenu après la 6^{e} étape (7^{e} étape) ;
approvisionner l'oxyde de graphite de la 7^{e} étape jusque dans un four à lit fluidisé dans une atmosphère réductrice on pour réduire et délaminer l'oxyde de graphite par choc thermique (8^{e} étape) ;
collecter un matériau d'échelle nanométrique présentant une structure de graphène produit dans la 8^{e} étape (9^{e} étape) ; et
séparer le matériau d'échelle nanométrique présentant une structure de graphène (10^{e} étape) ;
dans lequel les étapes 1 à 5 et 8 à 10 sont effectuées en continu,
dans lequel la 3^{e} étape est exécutée alors qu'on maintient une température dans une plage allant d'environ 0 °C à environ 54 °C ; et
dans laquelle la solution aqueuse de peroxyde d'hydrogène est dans une plage allant d'environ 1 % en poids à environ 10 % en poids.

8. Procédé selon la revendication 7, dans lequel le matériau d'échelle nanométrique présentant une structure de graphène a une épaisseur d'environ 100 nm ou moins, une superficie allant d'environ 300 m²/g à environ 3 000 m²/g, et de l'oxygène résiduel d'environ 1,0 % en poids ou moins.

9. Appareil permettant la production d'oxyde de graphite, comprenant :
une unité d'approvisionnement en coulis de graphite pour approvisionner en continu un coulis de graphite en mélangeant du graphite et de l'acide sulfurique ;
une unité d'approvisionnement en permanganate pour approvisionner en continu une solution d'acide sulfurique au permanganate ;
une partie à micro-canaux comprenant un micro-canal ou plusieurs micro-canaux agencés dans un ordre et ayant chacun une entrée connectée à l'unité d'approvisionnement en coulis de graphite et à l'unité d'approvisionnement en permanganate dans laquelle on maintient un mélange réactionnel dans une plage de température déterminée ;
une unité d'approvisionnement en eau configurée de manière à approvisionner en continu de l'eau, et ayant une entrée connectée à la partie à micro-canaux ;
une unité d'approvisionnement en peroxyde d'hydrogène configurée de manière à approvisionner en continu une solution de peroxyde d'hydrogène, et ayant une entrée connectée à la partie à micro-canaux ;
un laveur connecté à la partie à micro-canaux pour laver l'oxyde de graphite déchargé de la partie à micro-canaux après qu'une réaction d'oxydation est terminée ; et
un sécheur connecté au laveur pour sécher l'oxyde de graphite lavé dans le laveur dans une atmosphère dépressurisée.

10. Appareil permettant la production d'oxyde de graphite selon la revendication 9, comprenant en outre :
un pré-mélangeur positionné entre l'unité d'approvisionnement en permanganate et la partie à micro-canaux, et configuré de manière à approvisionner en continu et à mélanger l'acide sulfurique et le permanganate approvisionné depuis l'unité d'approvisionnement en permanganate, respectivement.

11. Appareil permettant la production d'oxyde de graphite selon la revendication 9, dans lequel la partie à micro-canaux présente de multiples micro-canaux interconnectés.

12. Appareil permettant la production d'un matériau d'échelle nanométrique présentant une structure de graphène, l'appareil comprenant :
un appareil de production d'oxyde de graphite selon l'une quelconque des revendications 9 à 11, à titre d'unité d'approvisionnement en poudre d'oxyde de graphite ;
un four à lit fluidisé qui présente une 1^{re} entrée connectée à l'unité d'approvisionnement en poudre d'oxyde de graphite et une 2^{e} entrée pour introduire un gaz atmosphérique réducteur, et qui maintient l'atmosphère réductrice et une température élevée ; et
un collecteur présentant une entrée montée au niveau d'un plafond du four à lit fluidisé.

13. Appareil selon la revendication 12, comprenant en outre :
un cyclone connecté au collecteur pour séparer le matériau d'échelle nanométrique présentant une structure de graphène hors d'un gaz du four à lit fluidisé, et pour réapprovisionner le gaz séparé jusque dans le four à lit fluidisé.
